# EUROPEAN PATENT APPLICATION

(11) **EP 4 815 228 A1**
(43) Date of publication of application: **30.09.2026**
(21) Application number: 25382297.7
(22) Date of filing: 27.03.2025
(51) Int. Cl.: H02G 3/04

(54) **RACEWAY ASSEMBLY FOR CABLES, AND RETAINER FOR SAID ASSEMBLY**

(71) Applicant: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.

(57) **Abstract**

The invention relates to a raceway assembly for cables comprising a U-shaped raceway (1) and to a retainer (6) to retain cables in the raceway (1). The retainer (6) is an oblong rigid part with two coupling ends (7). The coupling end (7) comprises a hook (8), forming an opening (9) and a cradle (10), and a tab (11) which deforms elastically from an upright position, in which it forms with the hook (8) a clamp which immobilises a flange (5) of the raceway (1) housed in the cradle (10), to a collapsed position in which the flange (5) can be moved in the cradle (10) in a longitudinal direction (X) of the retainer (6) and can come out through the opening (9). The flange (5) housed in the cradle (10) pushes the tab (11) which is moved from the upright position to the collapsed position.

## Description

### Field of the Invention

The invention is comprised in the field of cable raceways which are used to guide and support electric cable bundles, optical fibre cable bundles, or cable bundles of another type.

More specifically, the invention relates to a raceway assembly for cables, such as for example electric cables or optical fibre cables, of the type comprising a raceway with a U-shaped cross-section formed by a bottom wall and two facing side walls demarcating between one another an open upper face of said raceway, each of said side walls comprising a flange; and at least one retainer to retain cables running in said raceway, said retainer being made up of a rigid part having an oblong shape with a larger dimension in a longitudinal direction, and said retainer comprising two opposite coupling ends in said longitudinal direction and each one configured to be coupled to said flange of one of the side walls of the raceway, such that said retainer thus coupled to said flanges of the side walls of the raceway forms a bridge between said side walls.

The invention also relates to a retainer for this assembly.

### State of the Art

EP2806515A2 and EP2112732A1 describe raceway assemblies for cables of the type described above. In the solutions disclosed in these documents, the retainer performs its function in a satisfactory manner. However, sometimes, particularly when the raceway is located in a place with access limitations, it may be difficult for the user to couple or uncouple the retainer with respect to the raceway. Moreover, these known retainers have the problem of stiffening the side walls of the raceway in the segment in which the retainer is located, which complicates the coupling and uncoupling of a cover which is optionally snapped onto the raceway above the retainer to cover the open upper face of the raceway.

### Description of the Invention

The purpose of the invention is to provide a raceway assembly for cables of the type indicated above, which facilitates both the coupling and uncoupling of the retainer with respect to the raceway as well as the coupling and uncoupling of a cover that can optionally be placed above the retainer to cover the open upper face of the raceway, all this without complicating or increasing the cost of manufacturing the retainer.

This purpose is achieved by means of a raceway assembly for cables of the type indicated above, characterised in that at least one of the coupling ends of the retainer has a coupling configuration comprising:
- a hook forming an opening and a cradle in which the flange is housed;
- and an elastically collapsible tab, said tab being able to deform elastically to transition from an upright position in which said tab forms with said hook a clamp which immobilises said flange housed in said cradle, to a collapsed position in which said flange housed in said cradle can be relatively moved in said longitudinal direction with respect to said hook and can come out through said opening;
and wherein said hook and said tab are shaped such that when said flange is housed in said cradle and relatively moved in the longitudinal direction with respect to said hook, said flange pushes said tab which deforms elastically, being moved from said upright position to said collapsed position.

The possibility of movement of the flange in the hook in the longitudinal direction provides a margin for the position of the retainer with respect to the flange, and this makes it easier to couple the retainer to the raceway. The uncoupling of the retainer is also easier because it can be performed by relatively moving the retainer with respect to the side wall in the longitudinal direction, such that the pushing of the flange takes the tab to its collapsed position. Furthermore, as a result of the fact that the flange housed in the cradle can be moved in the longitudinal direction against the resistance of the tab which deforms elastically, it is possible to slightly bend the side walls towards one another in the segment of the raceway where the retainer is arranged. In cases where a cover is optionally coupled to the raceway, this slight bending of the side walls allows easier coupling and uncoupling of the cover. In other words, the presence of the retainer coupled to the raceway does not cause absolute rigidity of the side walls of the raceway in the segment where the retainer is arranged and, therefore, does not complicate the coupling or uncoupling of the cover.

Embodiments in which the coupling configuration according to the invention is located at a single coupling end are possible, while the other coupling end has another coupling configuration, such as, for example, a complementary shape of the flange that snaps onto same. In the preferred embodiments, the two coupling ends have the coupling configuration according to the invention. The advantageous technical effects described above are thus obtained on the two side walls of the raceway. Preferably, the two coupling ends are identical to one another, so the retainer can be coupled to the raceway interchangeably in two positions.

The flange can have any suitable shape, and embodiments in which the flange is formed at different heights of the side walls are possible. In the preferred embodiments, the flange on each of the side walls is formed at a free end of the side wall. The flange is therefore more accessible and has a greater range of movement in the longitudinal direction when the side wall experiences bending.

Preferably, the flange on each of the side walls is facing the bottom wall, and when the retainer is coupled to the raceway, with its two coupling ends coupled to the flanges, the hook is arranged between the flange and the bottom wall. As a result of this configuration, the retainer does not occupy any space on the upper face of the free end of the side walls, so it does not interfere with other devices, such as for example a cover, which can optionally be coupled to the raceway. Furthermore, the hook thus arranged between the flange and the bottom wall of the raceway is better protected against accidental impacts by outer bodies.

Preferably, the coupling configuration according to the invention at the coupling end of the retainer further comprises a pushing element shaped to receive a finger of a hand, said pushing element being associated with the tab such that when said pushing element is pushed by a finger of a hand, said tab deforms elastically and transitions from the upright position to the collapsed position. By acting with a finger of a hand on the pushing element, the user can even more easily perform the coupling or the uncoupling of the retainer with respect to the raceway.

In the preferred embodiments, the tab projects cantilevered from the cradle formed by the hook, and the pushing element is formed in a prolongation of said tab. The hook comprises a notch and the tab is arranged facing the notch and enters the notch in the collapsed position of the tab. This configuration is simple and provides better protection of the tab and an effective interaction between the tab and the flange.

Preferably, the notch has a prolongation in a central body of the retainer between the two coupling ends, and the pushing element is arranged facing the prolongation and enters the prolongation in the collapsed position of the tab. As a result of this configuration, the pushing element can be operated by the user's finger of a hand in an easier and more effective manner.

In advantageous embodiments, each of the side walls of the raceway has a protrusion for cooperating with a corresponding lip of a cover which is coupled to the raceway to close the open upper face. The side walls of the raceway are sized such that they can experience elastic bending, which brings the flanges of the two side walls closer to one another. The retainer configured according to the invention is particularly advantageous for these embodiments because, as stated above, it allows a slight bending of the side walls for easier coupling and uncoupling of the cover.

Preferably, the flanges have a cylindrical arc-shaped surface, and the hook and the tab form a cylindrical arc-shaped surface which is coupled to the cylindrical arc-shaped surface of the flange when the tab is in the upright position and forms with the hook a clamp which immobilises said flange. This configuration provides a robust securing of the retainer coupled to the raceway.

Preferably, the pushing element is arranged on a face of a central body of the retainer, between the two coupling ends. Preferably, on a face opposite the face in which the pushing element is arranged, said central body has a concavity to receive the user's finger of a hand. This facilitates the grasping of the retainer and the actuation of the pushing element by the user.

Preferably, the raceway is a profile made of a polymer material, and preferably, the retainer consists of a single part made of a polymer material.

The invention also relates to the retainer of the assembly according to the invention described above, considered independently.

Therefore, the invention also relates to a retainer for being coupled to a raceway to retain cables running in said raceway, said retainer being made up of a rigid part having an oblong shape with a larger dimension in a longitudinal direction, said retainer comprising two opposite coupling ends in said longitudinal direction, characterised in that at least one of said coupling ends has a coupling configuration comprising:
- a hook forming an opening and a cradle;
- and an elastically collapsible tab, said tab being able to deform elastically to transition from an upright position, in which said tab forms with said hook a clamp, to a collapsed position.

Preferably, the two coupling ends have the coupling configuration according to the invention.

Preferably, the coupling configuration at the coupling end comprises a pushing element shaped to receive a finger of a hand, said pushing element being associated with the tab such that when said pushing element is pushed by a finger of a hand, said tab deforms elastically and transitions from the upright position to the collapsed position.

Preferably, the tab projects cantilevered from the cradle formed by the hook and the pushing element is formed in a prolongation of the tab. The hook comprises a notch and the tab is arranged facing the notch and enters the notch in the collapsed position of the tab.

Preferably, the notch has a prolongation in a central body of the retainer between the two coupling ends, and the pushing element is arranged facing the prolongation and enters the prolongation in the collapsed position of the tab.

Preferably, the hook and the tab form a cylindrical arc-shaped surface.

Preferably, the pushing element is arranged on a face of a central body of the retainer, between the two coupling ends. Preferably, on a face opposite the face in which the pushing element is arranged, said central body has a concavity to receive the user's finger of a hand.

The invention also comprises other detail features shown in the following detailed description of embodiments of the invention and in the attached figures.

### Brief Description of the Drawings

The advantages and features of the invention are apparent from the following description in which, in a non-limiting manner with respect to the scope of the main claim, preferred embodiments of the invention are described in reference to the figures.
Figure 1 is a perspective view of an assembly formed by a raceway and a retainer coupled to the raceway.
Figure 2 is a front view of the assembly of Figure 1.
Figure 3 is an enlarged detail view of Figure 1.
Figures 4 and 5 are, respectively, a top perspective view and a bottom perspective view of the retainer, with the tab in the upright position.
Figures 6, 7, and 8 are three perspective views of one of the coupling ends of the retainer, with the tab in the upright position, from different angles.
Figures 9 and 10 are, respectively, a front view and a top view of the coupling end of the retainer, with the tab in the upright position.
Figure 11 is a front view of the coupling end of the retainer, with the tab in the collapsed position.
Figures 12 and 13 are two perspective views of the coupling end of the retainer, with the tab in the collapsed position, from different angles.
Figure 14 is a front partial view of the raceway, showing one of the two side walls.
Figure 15 is a front partial view showing the retainer coupled to the raceway, with the tab in the upright position.
Figure 16 is a view corresponding to Figure 15, sectioned along a central plane of the retainer.
Figure 17 is a front partial view showing the retainer coupled to the raceway, with the tab in the collapsed position and the side wall bent, such that the flange has been moved towards the opposite side wall.
Figure 18 is a view corresponding to Figure 17, sectioned along a central plane of the retainer.
Figure 19 is a front view of a cover.
Figure 20 is a front view of the assembly of Figures 1 and 2, with the cover snapped onto the raceway.

### Detailed Description of Embodiments of the Invention

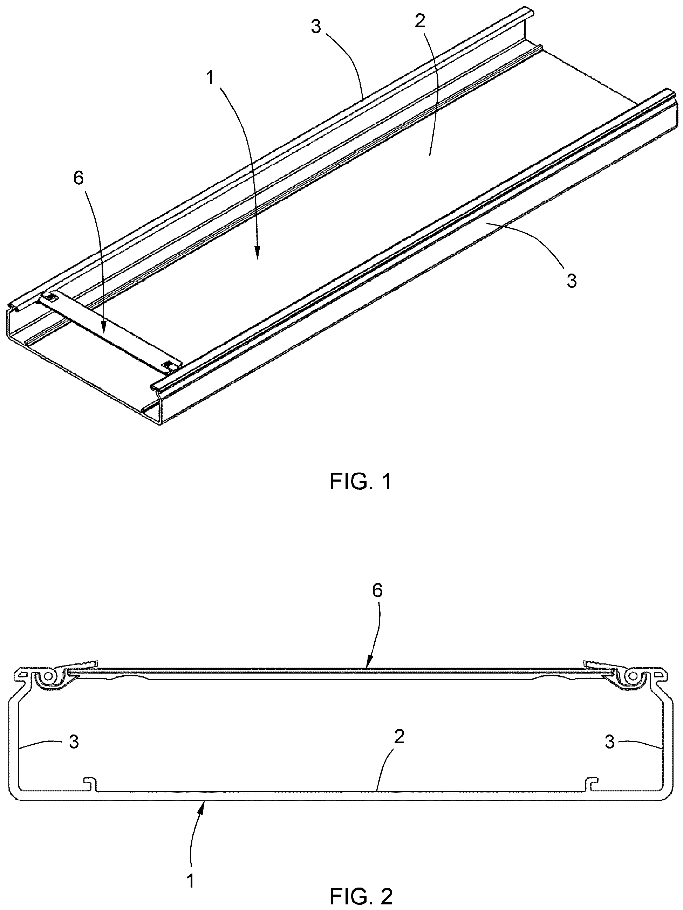

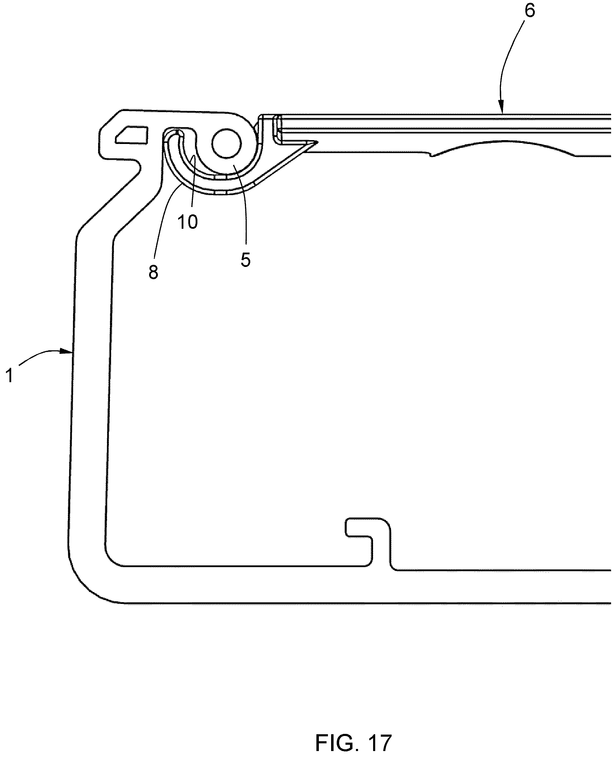

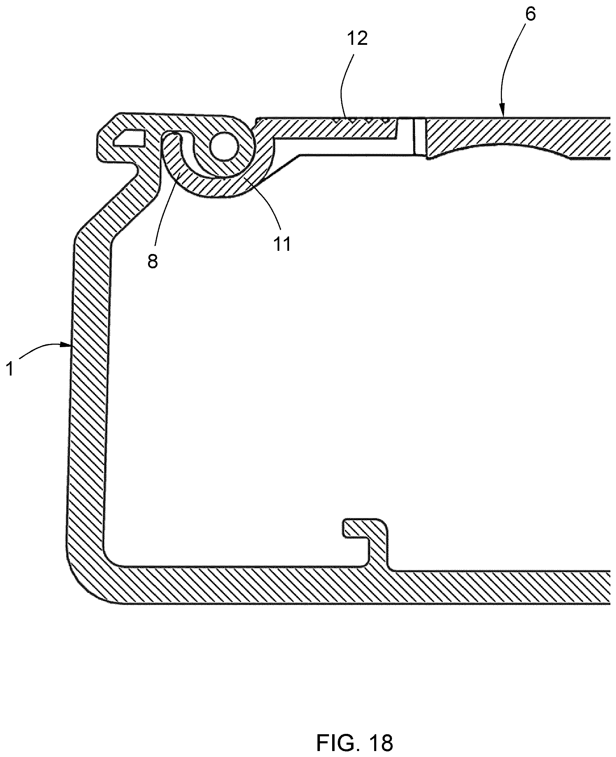

Figures 1 to 20 show an embodiment of a raceway assembly for cables according to the invention. As can be seen in Figures 1 to 3, the assembly is formed by a raceway 1 for cables and a retainer 6 which is coupled to the raceway 1 to retain cables running in said raceway 1. In the example shown in the figures, the assembly comprises a single retainer 6, arranged close to one end of the raceway 1. However, the assembly can have a plurality of retainers 6, and each of them can be arranged in any position along the raceway 1. The raceway 1 is an extruded profile made of a polymer material, preferably a thermoplastic material such as PVC, polycarbonate, or polypropylene. The retainer 6 is moulded from a single part made of a polymer material, preferably a thermoplastic material such as PVC, polycarbonate, or polypropylene. The polymer material can be the same or different for the raceway 1 and the retainer 6.

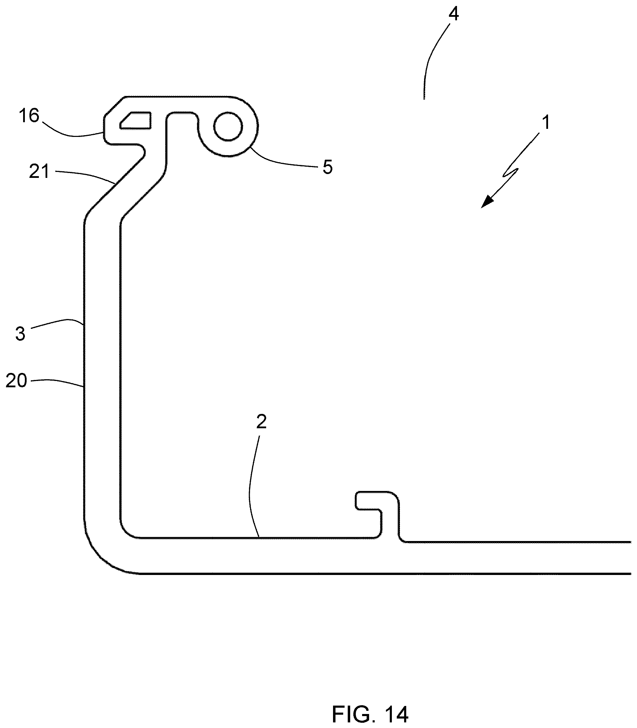

As can be seen in Figures 1-3 and 14, the raceway 1 is a profile with a U-shaped cross-section, with a bottom wall 2 and two facing side walls 3 demarcating between one another an open upper face 4 of the raceway 1. The two side walls 3 are identical. As can be seen in Figure 14, each side wall 3 comprises a first segment 20 perpendicular to the bottom wall 2 followed by an end segment 21 inclined towards the opposite side wall 3. The inclined end segment 21 has a free end where there is formed a flange 5 with a cylindrical arc-shaped surface with an angular range greater than 180°. The flange 5 is facing the bottom wall 2. A protrusion 16 used to couple a cover to the raceway 1 is formed at the free end of the inclined end segment 21, on the outer face of the side wall 3, as will be seen below.

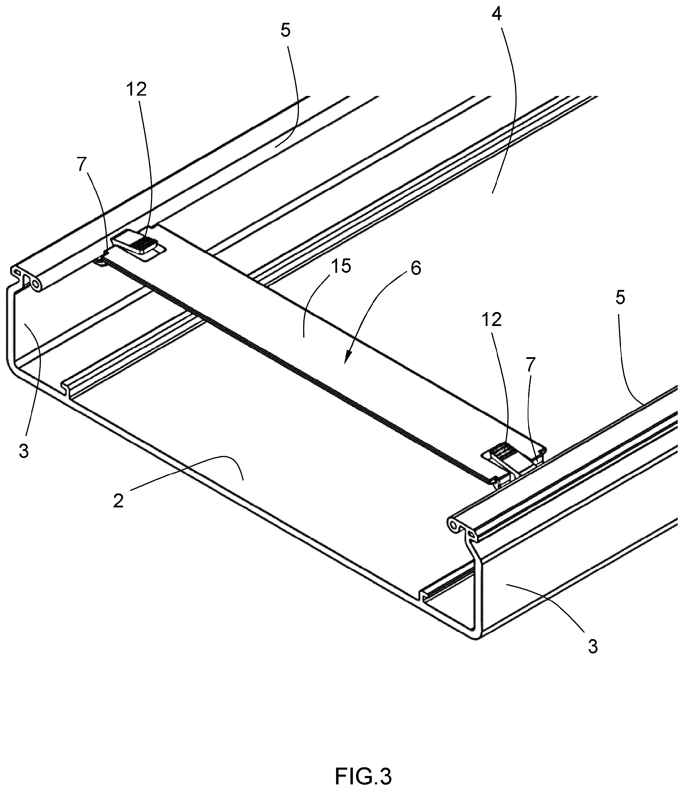

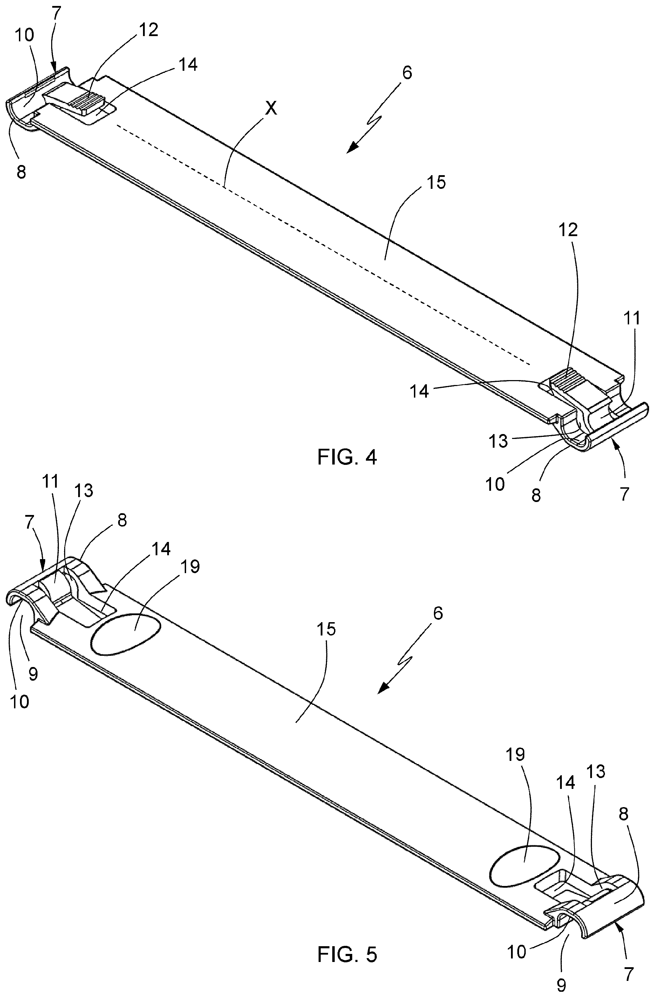

The retainer 6 is depicted in greater detail in Figures 4-13. The retainer 6 is a rigid part having an oblong shape, with a larger dimension in a longitudinal direction X, and comprises two opposite coupling ends 7 and a central segment 15 between these two coupling ends 7. The central segment 15 has a flat, thin bar shape that is arranged parallel to the bottom wall 2 when the retainer is coupled to the raceway 1. The two coupling ends 7 are identical and have a coupling configuration to be coupled to each flange 5. As can be seen in Figure 3, the retainer 6 thus coupled to the flanges 5 forms a bridge between the side walls 3 of the raceway 1, thereby closing a short segment of the open upper face 4 of the raceway 1. The cables (not depicted in the figures) running in the raceway 1 are thereby retained by the retainer 6.

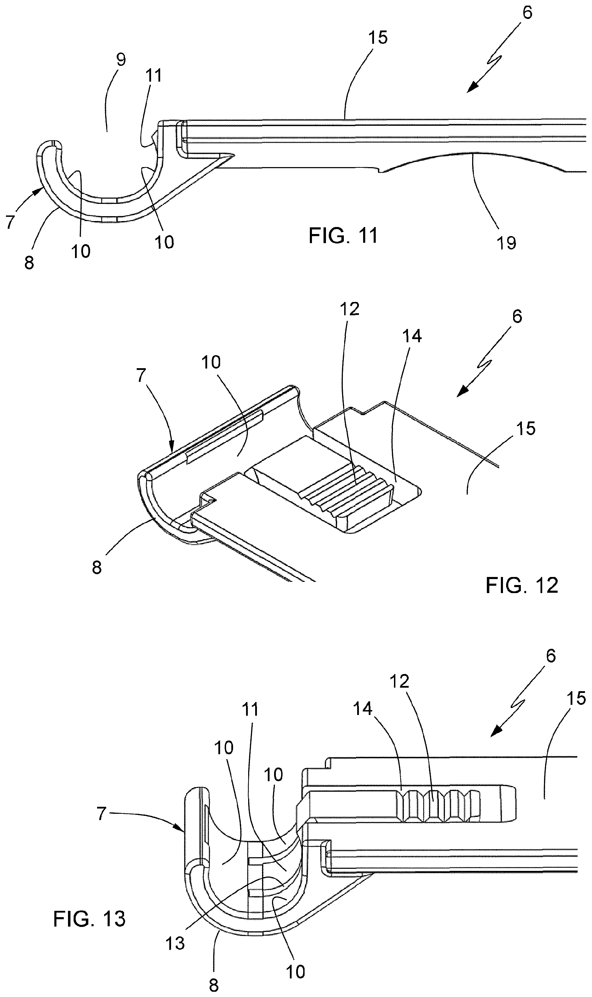

The coupling configuration at each of the two coupling ends 7 of the retainer 6 comprises a hook 8 and an elastically collapsible tab 11. The hook 8 forms an opening 9 and a cradle 10. The tab 11 projects cantilevered from the cradle 10 and has a prolongation forming a pushing element 12 shaped to receive a finger of a hand. When the pushing element 12 is pushed by a finger of a hand, the tab 11 deforms elastically and transitions from an upright position, shown in Figures 4-10, to a collapsed position shown in Figures 11-13. The hook 8 comprises a notch 13 facing which the tab 11 is arranged. The notch 13 has a prolongation 14 in the central body 15 of the retainer, such that the pushing element 12 is arranged facing said prolongation 14 of the notch 13. When the tab 11 is in the collapsed position, the tab 11 enters the notch 13 and the pushing element 12 enters the prolongation 14.

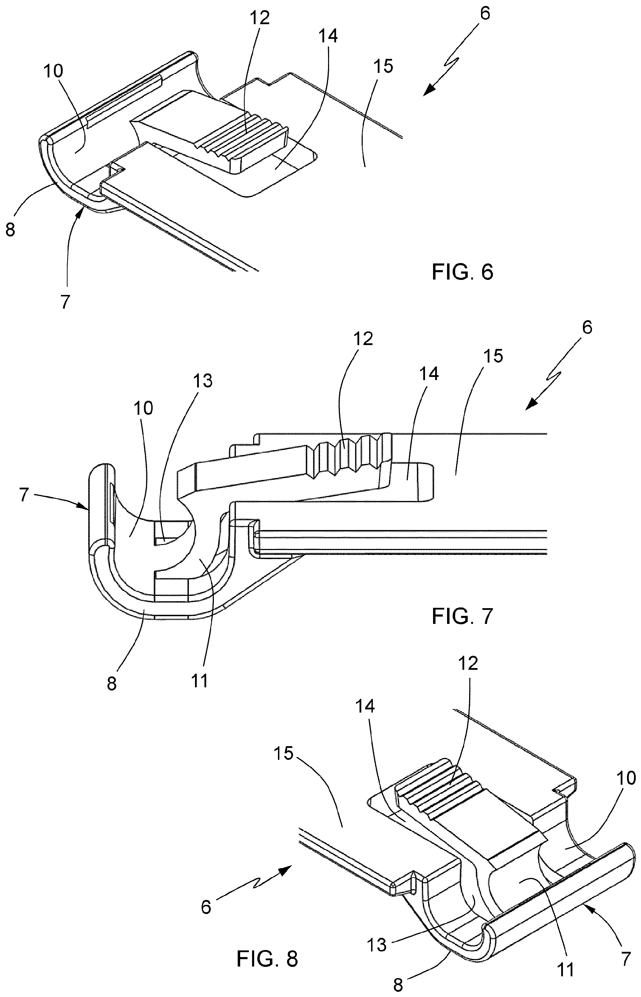

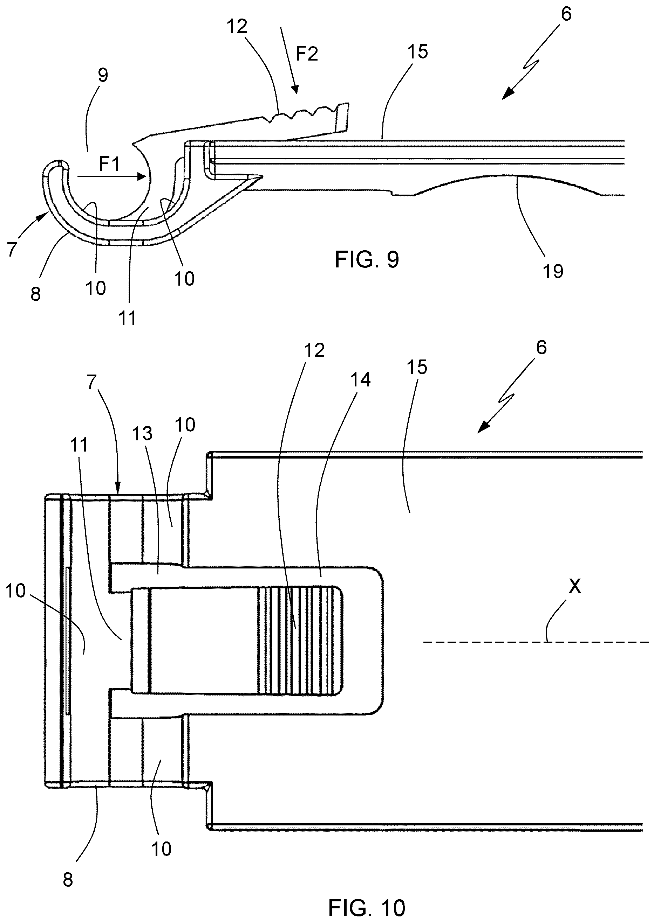

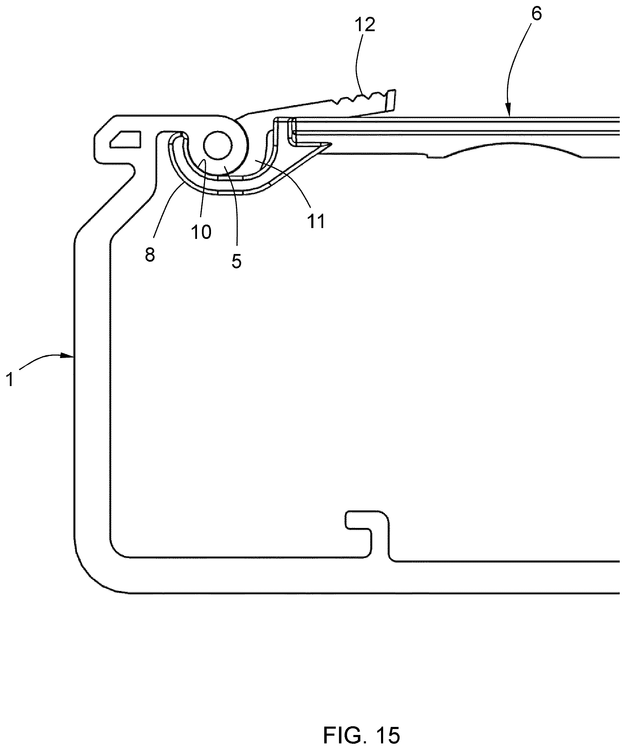

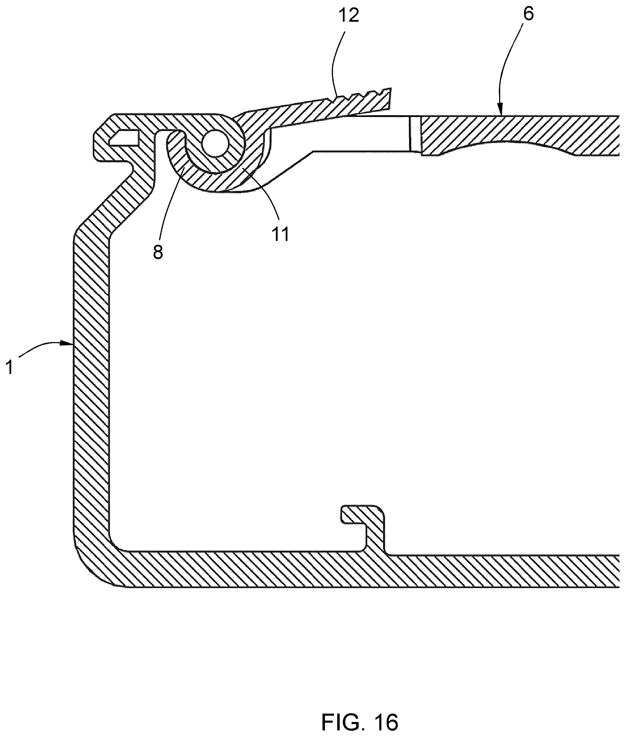

As can be seen in Figures 7 and 9, in the upright position, the tab 11 and a central part of the hook 8 form a cylindrical arc-shaped surface with an angular range greater than 180°. The diameter of this cylindrical arc corresponds to that of the surface of the flange 5, such that the cylindrical arc-shaped surface of the flange 5 is coupled to the cylindrical arc-shaped surface formed by the tab 11 and the hook 8. In side parts of the hook 8, on either side of the notch 13, the hook 8 has a greater range in the longitudinal direction X. As can be seen in Figures 15 and 16, in the upright position the tab 11 thereby forms with the hook 8 a clamp which immobilises the flange 5 housed in the cradle 10. In the collapsed position of the tab 11 shown in Figures 11-13 and 17-18, the tab 11 forms with the central part of the hook a surface having a shape corresponding to that of the side parts of the hook 8, so the flange 5 housed in the cradle 10 can be relatively moved in the longitudinal direction X with respect to the hook 8 and can come out through the opening 9. Furthermore, when the flange 5 is housed in the cradle 10 and relatively moved in the longitudinal direction X with respect to the hook 8, the flange 5 pushes the tab 11 in the direction of the arrow F1 shown in Figure 9, and the tab 11 deforms elastically, being moved from the upright position to the collapsed position.

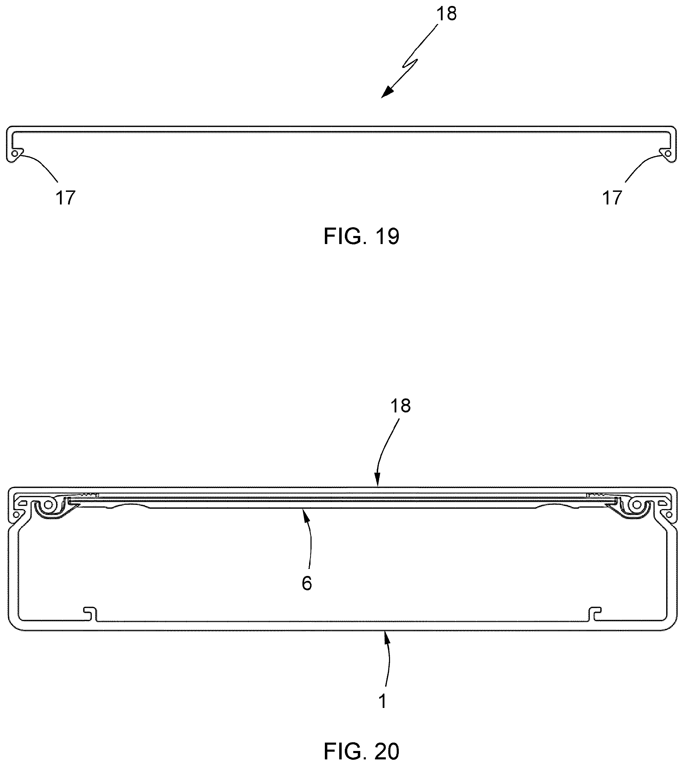

When the retainer 6 is coupled to the raceway 1, with its two coupling ends 7 coupled to the flanges 5, the hook 8 is arranged between the flange 5 and the bottom wall 2 of the raceway 1. The coupling ends 7 of the retainer 6 thereby leave the upper face of the free end of the side wall 3 free. This facilitates the placement of a cover 18 as shown in Figure 19. The cover 18 has at its side ends a lip 17 which cooperates with the protrusion 16 of the side walls 3 of the raceway 1, such that the cover 18 is snapped onto the raceway 1 to close the open upper face 4, as shown in Figure 20. The side walls 3 of the raceway 1 are sized such that they can experience elastic bending, which brings the flanges 5 of the two side walls 3 closer to one another. As a result of the particular configuration of the coupling ends 7 of the retainer 6 described above, with the retainer 6 coupled to the raceway 1 it is possible to slightly bend the side walls 3 of the raceway 1 to bring the flanges 5 closer to one another, and each flange 5 housed in the cradle 10 can be relatively moved in the longitudinal direction X with respect to the hook 8. The protrusion 16 is moved integrally with the flange 5. This allows easy uncoupling of the lip 17 and the protrusion 16, and therefore the uncoupling of the cover 18 with respect to the raceway 1.

To couple and uncouple the retainer 6 with respect to the raceway 1, the user pushes the pushing element 12 with their finger of a hand in the direction of the arrow F2 shown in Figure 9, thereby causing elastic deformation of the tab 11, taking it from the upright position to the collapsed position, in which the flange 5 can freely come out through the opening 9 of the hook 8. As can be seen in Figure 9, on a face of the central body 15 of the retainer, opposite the face on which the pushing element 12 is arranged, said central body 15 has a concavity 19 to receive the user's other finger of a hand and thereby facilitate the grasping of the retainer 6 and the actuation of the pushing element 12.

## Claims

1. A raceway assembly for cables, comprising a raceway (1) with a U-shaped cross-section formed by a bottom wall (2) and two facing side walls (3) demarcating between one another an open upper face (4) of said raceway (1), each of said side walls (3) comprising a flange (5); and at least one retainer (6) to retain cables running in said raceway (1), said retainer (6) being made up of a rigid part having an oblong shape with a larger dimension in a longitudinal direction (X), said retainer (6) comprising two opposite coupling ends (7) in said longitudinal direction (X) and each one configured to be coupled to said flange (5) of one of the side walls (3) of the raceway (1), such that said retainer (6) thus coupled to said flanges (5) of the side walls (3) of the raceway (1) forms a bridge between said side walls (3); **characterised in that** at least one of said coupling ends (7) has a coupling configuration comprising:
- a hook (8) forming an opening (9) and a cradle (10) in which said flange (5) is housed;
- and an elastically collapsible tab (11), said tab (11) being able to deform elastically to transition from an upright position in which said tab (11) forms with said hook (8) a clamp which immobilises said flange (5) housed in said cradle (10), to a collapsed position in which said flange (5) housed in said cradle (10) can be relatively moved in said longitudinal direction (X) with respect to said hook (8) and can come out through said opening (9);
and wherein said hook (8) and said tab (11) are shaped such that when said flange (5) is housed in said cradle (10) and relatively moved in said longitudinal direction (X) with respect to said hook (8), said flange (5) pushes said tab (11) which deforms elastically, being moved from said upright position to said collapsed position.

2. The raceway assembly for cables according to claim 1, wherein the two coupling ends (7) have said coupling configuration.

3. The raceway assembly for cables according to any one of claims 1 or 2, wherein said flange (5) on each of said side walls (3) is formed at a free end of said side wall (3).

4. The raceway assembly for cables according to any one of claims 1 to 3, wherein said flange (5) on each of the side walls (3) is facing said bottom wall (2); and when said retainer (6) is coupled to said raceway (1), with its two coupling ends (7) coupled to said flanges (5), said hook (8) is arranged between said flange (5) and said bottom wall (2).

5. The raceway assembly for cables according to any one of claims 1 to 4, wherein said coupling configuration at the coupling end (7) comprises a pushing element (12) shaped to receive a finger of a hand, said pushing element (12) being associated with said tab (11) such that when said pushing element (12) is pushed by a finger of a hand, said tab (12) deforms elastically and transitions from said upright position to said collapsed position.

6. The raceway assembly for cables according to claim 5, wherein said tab (11) projects cantilevered from said cradle (10) formed by the hook (8), and said pushing element (12) is formed in a prolongation of said tab (11); said hook (8) comprises a notch (13) and said tab (11) is arranged facing said notch (13) and enters said notch (13) in the collapsed position of said tab (11).

7. The raceway assembly for cables according to claim 6, wherein said notch (13) has a prolongation (14) in a central body (15) of said retainer (6) between said two coupling ends (7), and said pushing element (12) is arranged facing said prolongation (14) and enters said prolongation (14) in the collapsed position of said tab (11).

8. The raceway assembly for cables according to any one of claims 1 to 7, wherein each of said side walls (3) of the raceway (1) has a protrusion (16) for cooperating with a corresponding lip (17) of a cover (18) which is coupled to said raceway (1) to close said open upper face (4), and said side walls (3) of the raceway (1) are sized such that they can experience elastic bending, which brings said flanges (5) of the two side walls (3) closer to one another.

9. The raceway assembly for cables according to any one of claims 1 to 8, wherein said flanges (5) have a cylindrical arc-shaped surface, and said hook (8) and said tab (11) form a cylindrical arc-shaped surface which is coupled to the cylindrical arc-shaped surface of said flange (5), when said tab (11) is in the upright position and forms with said hook (8) a clamp which immobilises said flange (5).

10. A retainer (6) for being coupled to a raceway (1) to retain cables running in said raceway (1), said retainer (8) being made up of a rigid part having an oblong shape with a larger dimension in a longitudinal direction (X), said retainer (6) comprising two opposite coupling ends (7) in said longitudinal direction (X), **characterised in that** at least one of said coupling ends (7) has a coupling configuration comprising:
- a hook (8) forming an opening (9) and a cradle (10);
- and an elastically collapsible tab (11), said tab (11) being able to deform elastically to transition from an upright position, in which said tab (11) forms with said hook (8) a clamp, to a collapsed position.

11. The retainer (6) according to claim 10, wherein the two coupling ends (7) have said coupling configuration.

12. The retainer (6) according to any one of claims 10 or 11, wherein said coupling configuration at the coupling end (7) comprises a pushing element (12) shaped to receive a finger of a hand, said pushing element (12) being associated with said tab (11) such that when said pushing element (12) is pushed by a finger of a hand, said tab (12) deforms elastically and transitions from said upright position to said collapsed position.

13. The retainer (6) according to claim 12, wherein said tab (11) projects cantilevered from said cradle (10) formed by the hook (8), and said pushing element (12) is formed in a prolongation of said tab (11); said hook (8) comprises a notch (13) and said tab (11) is arranged facing said notch (13) and enters said notch (13) in the collapsed position of said tab (11).

14. The retainer (6) according to claim 13, wherein said notch (13) has a prolongation (14) in a central body (15) of said retainer (8) between said two coupling ends (7), and said pushing element (12) is arranged facing said prolongation (14) and enters said prolongation (14) in the collapsed position of said tab (11).

15. The retainer (6) according to any one of claims 10 to 14, wherein said hook (8) and said tab (11) form a cylindrical arc-shaped surface.
